# EUROPÄISCHE PATENTSCHRIFT

(11) **EP 1 884 700 B1**
(45) Veröffentlichungstag und Bekanntmachung des Hinweises auf die Patenterteilung: **11.11.2009**
(21) Anmeldenummer: 07013927.4
(22) Anmeldetag: 17.07.2007
(51) Int. Cl.: F16K 31/60, F16K 35/04

(54) **Hebelventil für eine Sanitärarmatur mit Kaltwasser- und Warmwasserzuläufen**
Lever valve for a sanitary faucet with cold and warm water inflow
Soupape à levier pour un robinet sanitaire avec écoulements d'eau chaude et froide

(30) Priorität: 31.07.2006 DE 102006035886
(43) Veröffentlichungstag der Anmeldung: 06.02.2008
(73) Patentinhaber: Grohe AG, 58675 Hemer (DE)
(72) Erfinder: Gnauert, Werner, 58640 Iserlohn (DE); Steinhoff, Stefan, 59846 Sundern (DE); Mönig, Benedikt, 59757 Arnsberg (DE); Weiss, Martin, 58239 Schwerte (DE)

(56) Entgegenhaltungen:
- WO-A-00/26566
- DE-A1- 3 607 349
- US-B1- 6 170 523

## Beschreibung

Die Erfindung betrifft ein Hebelventil für eine Sanitärarmatur mit Kaltwasser- und Warmwasserzuläufen.

Einhebelventile für Sanitärarmaturen zum Mischen von Kalt- und Warmwasser sind in den unterschiedlichsten Ausgestaltungen bekannt. Sie weisen einen Stellhebel auf, an dem ein Betätigungsgriff anbringbar ist. Der Stellhebel ist in einer Buchse um eine quer zu deren Längsachse verlaufende Schenkachse kickbar gelagert. Die Buchse selbst ist in einem Gehäuse um ihre Längsachse drehbar gelagert. Durch Drehen des Stellhebels kann die Temperatur des Mischwassers eingestellt werden, während durch Kippen des Stellhebels die Menge an temperiertem Wasser eingestellt wird.

Der Stellhebel wirkt mit einem Ventilglied zusammen, das vom Stellhebel durch Bewegung um die Längsachse der Buchse zwecks Mischen von Kalt- und Warmwasser und durch kippen um die Schwenkachse zwecks Einstellens der Durchflussmenge des Mischwassers verstellbar ist. Als Ventilglied kommt beispielsweise eine bewegbar gelagert Keramikscheibe in Frage, die im Zusammenspiel mit einer feststehenden Keramikscheibe für die oben beschriebenen Funktionen sorgt, wenn der Stellhebel bewegt wird. Ein Beispiel für eine Einhebelmischarmatur ist in DE 35 03 793 A1 beschrieben. Alternativ ausgebildete Einhebelmischventile, bei denen die Mischwassertemperatur- und Mischwassermengenfunktion nicht durch planparallele Keramikscheiben sondern durch eine Kugel realisiert ist, finden sich in DE 22 16 040 A1 und DE 38 90 575 T1.

Der konstruktiv bedingte Verdrehwinkel, um den die Buchse in dem Gehäuse drehbar gelagert ist, kann für den praktischen Gebrauch des Einhebelmischventils unter Umständen zu groß oder insoweit ungünstig sein, als angesichts einer erhöhten Vorlauftemperatur des Warmwassers die maximal mögliche Mischwassertemperatur zu hoch ist. Daher ist es bekannt, insbesondere zur Begrenzung der maximalen Mischwassertemperatur Temperaturbegrenzungselemente bei Einhebelmischventilen einzubauen. Hierbei handelt es sich um drehfest auf das Gehäuse aufsetzbare Anschlagringe, die mit einem von dem Stellhebel oder dem mit diesem verbundenen Betätigungsgriff mitgenommenen Drehelement (Anschlagelement) zusammenwirken. Ein Beispiel für ein derartiges Temperaturbegrenzungselement findet sich in DE 36 07 349 C2.

Aufgabe der Erfindung ist es, ein Hebelventil für eine Sanitärarmatur mit Kaltwasser- und Warmwasserzuläufen zu schaffen, das über eine verbesserte Temperaturbegrenzung verfügt, die insbesondere unter beengten Platzverhältnissen noch in dem Hebelventil bzw. an diesem anbringbar ist.

Zur Lösung dieser Aufgabe wird mit der Erfindung ein Hebelventil für eine Sanitärarmatur mit Kaltwasser- und Warmwasserzuläufen vorgeschlagen, das versehen ist mit
- einem Gehäuse,
- einer Buchse, die in dem Gehäuse drehbar gelagert ist,
- einem Stellhebel, der um eine quer zur Längsachse der Buchse verlaufende Schwenkachse kippbar in der Buchse gelagert ist,
- einem Ventilglied, das von dem Stellhebel durch Bewegen um die Längsachse der Buchse zwecks Mischens von Kalt- und Warmwasser und durch Kippen um die Schwenkachse zwecks Einstellens der Durchflussmenge des Mischwassers verstellbar ist, und
- einem drehfest an dem Gehäuse angeordneten Anschlagring, der zwei Anschläge zur Begrenzung der Bewegung des Stellhebels und/oder der Buchse um deren Längsachse aufweist.

Bei diesem Hebelventil ist erfindungsgemäß vorgesehen,
- dass der Anschlagring zwei unter Bildung eines Aufnahmeringschlitzes übereinander angeordnete Ringelemente und zwei die Ringelemente verbindende Anschlagstege aufweist, die die Anschläge bilden, und
- dass ein Verschiebungselement vorgesehen ist, das sich an zwei gegenüberliegenden Enden bis in und/oder durch den Aufnahmeringschlitz hinein bzw. hindurch erstreckt und das von dem Stellhebel durchdrungen ist,
- wobei das Verschiebungselement beim Kippen des Stellhebels um dessen Schwenkachse innerhalb des Aufnahmeschlitzes linear bewegbar und bei Verschwenkung des Stellhebels um die Längsachse der Buchse bis zur Anlage an mindestens einem der beiden Anschlagstege innerhalb des Aufnahmeringschlitzes drehend mitnehmbar ist.

Bei dem erfindungsgemäßen Hebelventil ist das Anschlagelement, das mit dem an dem Gehäuse drehfest angeordneten Anschlagring zusammenwirkt, als ein insbesondere plattenförmiges Verschiebungselement ausgeführt, das bei Bewegung des Stellhebels von diesem mitnehmbar ist. Zu diesem Zweck weist das Verschiebungselement eine Aussparung auf, durch die sich hindurch der Stellhebel durch das Verschiebungselement erstreckt. Beide wirken derart miteinander zusammen, dass das Verschiebungselement beim Kippen des Stellhebels linear verschiebbar ist, während das Verschiebungselement gedreht wird, wenn der Stellhebel (und damit die Buchse) verschwenkt wird.

Das Verschiebungselement ragt an zwei (diametral) gegenüberliegenden Enden in zwei Ringschlitzabschnitte des Anschlagrings hinein, wobei die Ringschlitzabschnitte durch zwei übereinander angeordnete Ringelemente des Anschlagrings gebildet und die beiden Ringelemente über zwei Anschlagstege miteinander verbunden sind. Das Verschiebungselement wird also beim Kippen des Stellhebels radial zu dem Aufnahmeringschlitz, der die beiden durch die Anschlagstege voneinander getrennten Aufnahmeringschlitzabschnitte aufweist, bewegt, während sich das Verschiebungselement in Umfangserstreckung des Aufnahmeringschlitzes innerhalb dieses bewegt, wenn der Stellhebel (und damit die Buchse) um die Längsachse der Buchse verschwenkt wird.

Das für die Temperaturbegrenzungsfunktion erforderliche Anschlagelement kann als kleinformatiges Verschiebungselement ausgeführt werden, das nur einen geringen Einbauraum benötigt. Dies ist insbesondere dann von Vorteil, wenn dem Einhebelmischventil eine zusätzliche Funktionalität, wie beispielsweise eine vom Bediener überwindbare Mischwassermengenbegrenzung verliehen werden soll. Hierzu wird im Bereich des Schwenkweges des Stellhebels Platz für Nocken oder Verrastungen benötigt, wie es beispielsweise in DE 101 38 304 A1 beschrieben ist.

In vorteilhafter Weiterbildung der Erfindung ist vorgesehen, dass der Stellhebel zumindest innerhalb seines das Verschiebungselement durchdringenden Bereichs einen polygonalen Querschnitt aufweist und dass das Verschiebungselement eine Aussparung mit zu diesem Querschnitt komplementärem Randverlauf aufweist. Durch diese Art der Ausbildung des Querschnitts des Stellhebels und der Aussparung des Verschiebungselements wird auf besonders einfache Art und Weise ein Mitnehmen des Verschiebungselements bei Bewegung des Stellhebels um dessen beide Bewegungsachsen ermöglicht. Das formschlüssige Zusammengreifen von Verschiebungselement und Stellhebel stellt die bevorzugte Variante für die kraftschlüssige Verbindung beider Elemente dar. Grundsätzlich könnte man den Kraftschluss auch durch eine Klemmung oder Reibung (Reibschluss) zwischen Stellhebel und Verschiebungselement realisieren.

In vorteilhafter Weise ist ferner vorgesehen, dass die Anschlagstege punktsymmetrisch zum Mittelpunkt des Anschlagrings angeordnet sind und an ihren Enden Anschlagflächen aufweisen, wobei die jeweils im wesentlichen diametral gegenüberliegenden Anschlagflächen der beiden Anschlagstege in einer sich quer zur Linearbewegungsrichtung des Verschiebungselements erstreckenden Richtung voneinander einen Abstand aufweisen, der im wesentlichen gleich der Breitenerstreckung des Verschiebungselements quer zu seiner Linearbewegungsrichtung ist. Hierbei sind die Anschlagstege relativ zueinander derart positioniert, dass das Verschiebungselement in beiden Endstellungen an beiden Anschlägen anliegt. Dadurch erhöht sich die Stabilität der Temperaturbegrenzungselemente.

Ein weiterer Aspekt und Komfortgesichtspunkt von Einhebelmischventilen betrifft die Leichtgängigkeit ihrer Bedienung. Aus Gründen der einfacheren und bequemeren Bedienung derartiger Ventile ist eine Leichtgängigkeit wünschenswert. Bei verhältnismäßig langen Betätigungsgriffen kann jedoch der Fall eintreten, dass das Ventil selbsttätig in die Schließstellung übergeht, da das durch den Betätigungsgriff auf den Stellhebel wirkende Kippmoment, aufgrund dessen der Stellhebel um seine quer zur Längsachse der Buchse verlaufende Schwenkachse selbsttätig kippen kann, größer ist als die zwischen den Ventilgliedern (beispielsweise Keramikscheiben) wirkende Reibungskraft.

Auch diesbezüglich ist das erfindungsgemäß vorgeschlagene Verschiebungselement von Vorteil, da dieses Element nunmehr mit Reibung in dem Aufnahmeringschlitz und/oder im bzw. am Gehäuse gelagert sein kann. Hierdurch bietet sich auf einfache Art und Weise die Möglichkeit der Realisierung einer Hebelbremse.

Bereits oben ist erwähnt, dass aufgrund des geringen Einbauvolumens, den das erfindungsgemäße Verschiebungselement erfordert, es nun möglich ist, beispielsweise eine Mengenbegrenzung zu realisieren. Besonders zweckmäßig diesbezüglich ist es, wenn in/an der Buchse mindestens ein Rastkörper gelagert ist, der längs des von dem Stellhebel bei dessen Kippen um die Schwenkachse beschriebenen Kippweges angeordnet ist, und wenn das Verschiebungselement einen Rastnocken und/oder eine Rastausnehmung aufweist, der/die zur überwindbaren Begrenzung des Kippweges des Stellhebels mit dem Rastkörper zusammenwirkt/zusammenwirken. Hierbei befindet sich also an bzw. in der Buchse mindestens ein Rastkörper, der insbesondere federelastisch an der Buchse gelagert ist. Alternativ ist es möglich, dass der Rastkörper Teil des Verschiebungselements ist. An dem Verschiebungselement (oder alternativ dem Gehäuse bzw. der Buchse) ist ein Rastnocken oder eine Rastausnehmung vorgesehen, der/die zur überwindbaren Begrenzung des Kippweges des Stellhebels mit dem Rastkörper zusammenwirkt. Der Rastkörper kann platzsparend seitlich des Kippweges des Stellhebels in der Buchse angeordnet sein. Es ist auch möglich, zwei derartige Rastkörper beidseitig des Kippweges des Stellhebels anzuordnen. Über diese Rastkörper wird das Verschiebungselement beim Kippen des Stellhebels bewegt und wirkt mit seinem Rastnocken bzw. seiner Rastausnehmung mit dem Rastkörper zur Realisierung einer überwindbaren Begrenzung des Kippweges des Stellhebels zusammen.

In weiterer vorteilhafter Ausgestaltung der Erfindung ist vorgesehen, dass das Verschiebungselement mindestens eine Vertiefung aufweist, innerhalb derer der Rastnocken vorsteht.

Schließlich ist in vorteilhafter weiterer Ausgestaltung der Erfindung vorgesehen, dass das Verschiebungselement eine Aussparung aufweist, durch die sich der Stellhebel erstreckt, und dass die Aussparung in Richtung der Erstreckung des Kippweges des Stellhebels ein solches Ausmaß aufweist, dass, ohne das Verschiebungselement aus seiner Verrastung mit dem Rastkörper zu bewegen, ein Wasserfluss bis zu einer vorgebbaren Menge möglich ist. Hierbei ist es ferner von Vorteil, wenn der Rastkörper dann, wenn er sich außer Eingriff mit dem Rastnocken oder der Rastausnehmung des Verschiebungselements befindet, auf diesen/diese eine ungewollte Linearverschiebung des Verschiebungselements verhindernde Kraft ausübt.

Wie bereits oben erwähnt, ist das Verschiebungselement im einfachsten Fall als rechteckige Platte ausgebildet. Die Ausrichtung der rechteckigen Platte relativ zum Stellhebel bzw. relativ zu ihren Bewegungsrichtungen ist zweckmäßigerweise derart, dass ihre rechtwinklig zueinander verlaufenden Erstreckungen parallel und quer zur Linearbewegungsrichtung des Verschiebungselements verlaufen. An seinen in Längserstreckung liegenden Enden kann das Verschiebungselement gerundet sein, und damit der Krümmung des Anschlagrings folgen.

Die Erfindung wird nachfolgend anhand eines Ausführungsbeispiels und unter Bezugnahme auf die Zeichnung näher erläutert. Dabei zeigen im einzelnen:
- Fig. 1: eine perspektivische Ansicht eines Hebelventils mit Temperaturbegrenzungs-, Mischwassermengenbegrenzungs- und Hebelbremsfunktion,
- Fig. 2: eine Draufsicht auf das Hebelventil gemäß Fig. 1 von oben,
- Fign. 3 und 4: Draufsichten auf das Hebelventil gemäß Fig. 1 in den beiden Extremverdrehstellungen zur Verdeutlichung der Temperaturbegrenzungsfunktion und
- Fign. 5 bis 8: Längsschnittdarstellungen durch den oberen Teil des Hebelventils gemäß Fig. 1 zur Verdeutlichung der Mischwassermengenbegrenzungs- und Hebelbremsfunktion.

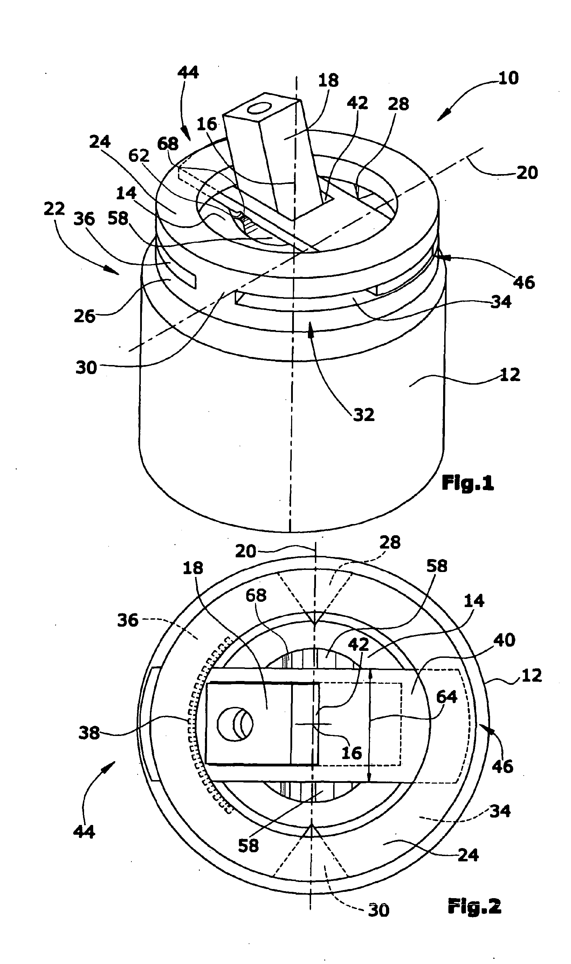

In den Figuren 1 und 2 sind die wesentlichen Merkmale eines erfindungsgemäßen Hebelventils 10 gezeigt. Das Hebelventil 10 weist ein Gehäuse 12 auf, in dem eine Buchse 14 um ihre Längsachse 16 drehbar gelagert ist (siehe insbesondere Fig. 2). Innerhalb des Gehäuses 12 bzw. der Buchse 14 befinden sich die Ventilglieder (nicht dargestellt), die im Zusammenspiel in an sich bekannter Weise für die Mischwassermengeneinstellung und die Mischwassertemperatureinstellung sorgen, und zwar in Abhängigkeit von der Betätigung bzw. Verstellung eines Stellhebels 18, der oben aus der Buchse 14 und dem Gehäuse 12 hinausragt und auf den ein (nicht dargestellter) Betätigungsgriff aufsteckbar ist (ggf. unter Zwischenschaltung eines der thermischen Isolation dienenden Zwischenelements aus beispielsweise Kunststoff, was an sich ebenfalls bekannt ist). Dabei ist der Stellhebel 18 um eine quer zur Längsachse 16 der Buchse 14 verlaufende Schwenkachse 20 kippbar. Über diese Schwenkachse 20 ist der Stellhebel 18 mit der Buchse 14 verbunden, so dass bei Drehung des Stellhebels 18 bzw. Verschwenkens des Stellhebels 18 um die Längsachse 16 der Buchse 14 diese (und damit auch das bewegbare Ventilglied) mitgenommen wird. Die Mitnahme des Ventilgliedes erfolgt also einerseits durch Bewegen des Stellhebels 18 um die Längsachse 16 der Buchse 14 zwecks Mischens von Kalt- und Warmwasser und durch Kippen des Stellhebels 18 um die Schenkachse 20 zwecks Einstellens der Durchflussmenge des Mischwassers.

Auf das obere Ende des Gehäuses 12 ist verdrehfest ein Anschlagring 22 aufgesetzt, der zwei übereinander angeordnete Ringelemente 24, 26 aufweist, welche über zwei diametral einander gegenüberliegende Anschlagstege 28, 30 miteinander verbunden sind. Dadurch bildet sich zwischen den beiden Ringelementen 24, 26 ein Aufnahmeringschlitz 32, der durch die beiden Anschlagstege 28, 30 unterbrochen und in zwei Ringschlitzabschnitte 34, 36 unterteilt ist. Die drehfeste Verbindung von Anschlagring 22 und Gehäuse 12 ist durch eine (Riefen-)Verzahnung 38 in Fig. 2 angedeutet.

Wie anhand der Figuren zu erkennen ist, erstreckt sich der Stellhebel 18 im Bereich seines aus dem Gehäuse 12 herausragenden Endes durch ein plattenförmiges Verschiebungselement 40 hindurch. Dieses Verschiebungselement 40 ist im wesentlichen stegförmig bzw. streifenförmig ausgebildet und weist eine Durchgangsöffnung oder Aussparung 42 sowie zwei einander gegenüberliegende Enden 44, 46 auf. An seinen Enden 44, 46 ist das Verschiebungselement 40 in den Abschnitten 34, 36 des Aufnahmeringschlitzes 32 eingetaucht. Damit ist das Verschiebungselement 40 bei einer Kippbewegung des Stellhebels 18 um dessen Schwenkachse 20 linear zwischen den beiden Ringelementen 24, 26 des Anschlagringes 22 geführt. Bei einer Verschwenkung des Stellhebels 18 um die Längsachse 16 der Buchse 14 sind die beiden Enden 44, 46 des Verschiebungselements 40 ebenfalls innerhalb der Aufnahmeringschlitzabschnitte 34, 36 des Anschlagringes 22 drehend geführt.

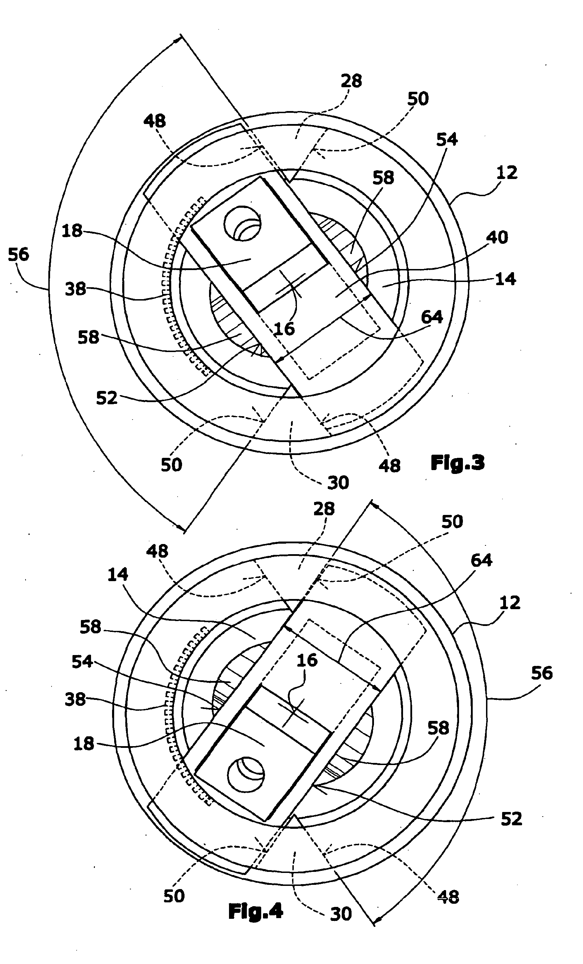

Anhand der Figuren 2 bis 4 wird das Zusammenspiel des Verschiebungselements 40 mit den Anschlagstegen 28, 30 des Anschlagrings 22 deutlich. Jeder Anschlagsteg 28, 30 weist im wesentlichen in Umfangsrichtung des Anschlagrings 22 weisende Anschlagflächen 48, 50 auf, die im wesentlichen diametral paarweise einander gegenüberliegen. Diese Anschlagflächen 48, 50 wirken nun mit den Seitenrändern 52, 54 des Verschiebungselements 40 zusammen, wie es in den Figuren 3 und 4 gezeigt ist. Hierdurch wird der Verschwenkbereich 56, um den der Stellhebel 18 um die Längsachse 16 der Buchse 14 verschwenkbar ist, begrenzt. Dies wird, wie bei Temperaturbegrenzern für Hebelventile an sich üblich, beispielsweise zur Begrenzung der maximalen Mischwassertemperatur genutzt.

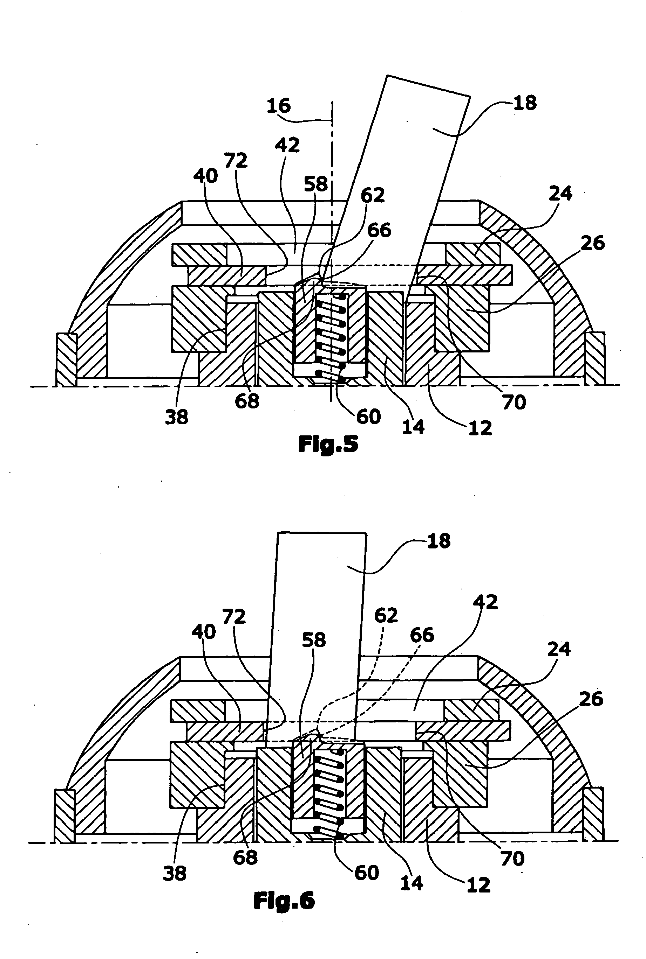

Der konstruktive Vorteil der Temperaturbegrenzung, wie sie vorstehend anhand der Figuren 1 bis 4 erläutert wurde, ist in dem geringen Platzbedarf zu sehen. So ist es nämlich möglich, direkt unterhalb des Verschiebungselements 40 innerhalb der Buchse 14 beidseitig des Kippweges des Stellhebels 18 jeweils einen Rastkörper 58 vorzusehen, der der überwindbaren Begrenzung der Mischwassermenge dient, und zwar im Zusammenspiel mit dem Verschiebungselement, was nachfolgend anhand der Figuren 5 bis 8 erläutert werden wird.

Innerhalb der Buchse 14 sind die beiden Rastkörper 58 durch Federn 60 federelastisch gelagert, wobei sie von unten gegen das Verschiebungselement 40 drücken. Das Verschiebungselement 40 weist an seiner den Rastkörpern 58 zugewandten Unterseite eine sich über die Breite (siehe Figuren 2 bis 4) des Verschiebungselements 40 erstreckende Vertiefung 62 auf, in der ein Rastnocken 66 ausgebildet ist, der sich ebenfalls über die Breite des Verschiebungselements 40 erstreckt. In der Ausgangssituation gemäß Fig. 5, in der das Hebelventil 10 geschlossen ist, greift der Rastkörper 58 mit dem Rastnocken 66 zusammen, indem eine Rastnase 68 des Rastkörpers 58 an dem Rastnocken 66 anliegt.

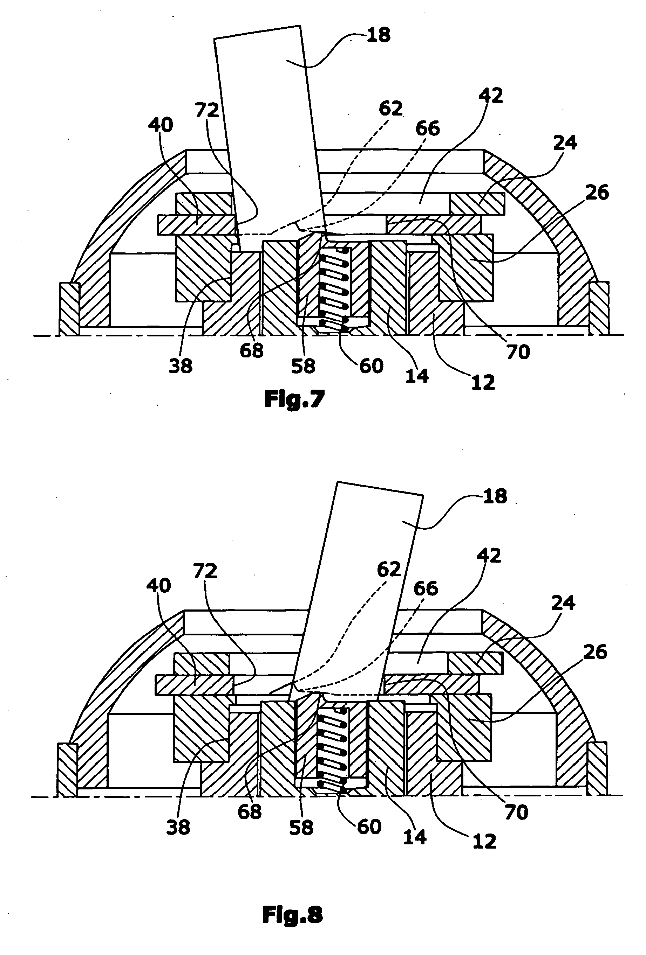

Wie anhand der Figuren 1 bis 4 und insbesondere anhand der Figuren 5 bis 8 zu erkennen ist, weist die Aussparung 42 des Verschiebungselements 40 eine größere Breitenerstreckung auf, als es zum Durchdringen durch den Stellhebel 18 erforderlich wäre. Ausgehend von der Situation, wie sie in Fig. 5 gezeigt, ist nun die Erstreckung und Lage dieser Aussparung 42 derart gewählt, dass der Stellhebel 18, ohne das Verschiebungselement mitzunehmen, in dessen Aussparung 42 bis zu der in Fig. 6 gezeigten Kippposition frei bewegbar ist. Während der Stellhebel 18 in der Geschlossenstellung gemäß Fig. 5 an dem Rand 70 der Aussparung 42 anliegt, liegt er in der Kippstellung gemäß Fig. 6 an der diesem Rand 70 gegenüber liegenden Rand 72 der Aussparung 42 an. Bei weiterer Bewegung des Stellhebels 18 nimmt dieser über die Anlage an dem Rand 72 der Aussparung 42 das Verschiebungselement 40 gegen die Verrastungskraft zwischen dem Rastkörper 58 und dem Rastnocken 66 mit, wie es in Fig. 7 gezeigt ist. Auf diese Weise wird also erreicht, dass sich längs des Kippweges des Stellhebels 18 eine überwindbare Begrenzung einstellt, durch die die Durchflussmenge des Mischwassers auf einen vorgebbaren Wert limitiert ist. Wenn die Mischwasserabgabemenge erhöht werden soll, muss diese Begrenzung durch eine erhöhte Krafteinwirkung auf den mit dem Stellhebel 18 verbundenen Betätigungsgriff (nicht dargestellt) überwunden werden, wie es in den Figuren 6 und 7 deutlich wird.

Beim Verringern der Durchflussmenge nach Überschreiten der überwindbaren Begrenzung bewegt sich zunächst der Stellhebel 18 wieder frei in der Aussparung 42 des Verschiebungselements 40, bis er an dem Rand 70 der Aussparung 42 wieder anliegt. In dieser Stellung, die in Fig. 8 gezeigt ist, ist der Hebel 18 gegen eine (weitere) Kippbewegung in Richtung Schließstellung gehindert. Hierdurch ist eine Stellhebelbremse realisiert. Durch Aufbringung einer Mindestkippkraft auf den Stellhebel 18 ausgehend aus der Position gemäß Fig. 8 kann der Stellhebel 18 dann zurück in die Schließstellung gemäß Fig. 5 bewegt werden, wobei das Verschiebungselement 40 entsprechend mitgenommen wird, bis es seine Position gemäß Fig. 5 einnimmt.

Zur Realisierung der Stellhebelbremsfunktion kann auch so vorgegangen werden, dass das Verschiebungselement 40 bei jeder Kippbewegung des Stellhebels mitgenommen wird. Durch eine Reib- oder Rastführung in dem Anschlagring 22 bzw. über der Buchse 14 kann dann eine ausreichend große, der Verschiebung des Verschiebungselements 40 entgegenstehende Kraft aufgebracht werden, die den Stellhebel 18 und damit den mit dem Stellhebel 18 verbundenen Betätigungsgriff in seiner gegenwärtigen Kippstellung hält. Die Reibkraft, die zu diesem Zweck auf das Verschiebungselement 40 wirken muss, kann beispielsweise durch die Führung zwischen den beiden Ringelementen 24, 26 aufgebracht werden. Eine Reibkraft kann aber auch insbesondere zusätzlich durch den gegen das Verschiebungselement 40 vorgespannten Rastkörper 58 aufgebracht werden. Durch Ausbildung einer Vielzahl von Rastvertiefungen und Rastnocken an der Unterseite des Verschiebungselements 40, die in Linearverschiebungsrichtung des Verschiebungselements 40 aufeinanderfolgend angeordnet sind, kann die Haltekraft für den Stellhebel 18 auch durch einen Formschluss (Verrastung) realisiert werden.

Auch die Mischwasserbegrenzungsfunktion braucht nicht notwendigerweise so, wie in den Figuren 5 bis 8 gezeigt, realisiert zu sein. Es ist beispielsweise möglich, wie oben für die alternative Ausgestaltung der Stellhebelbremsfunktion beschrieben, die Kopplung zwischen Stellhebel 18 und Verschiebungselement 40 so zu gestalten, dass das Verschiebungselement 40 bei jeder Kippbewegung des Stellhebels mitgenommen wird. Durch diese Linearverschiebung des Verschiebungselements 40 kommt es dann in einer konstruktiv bedingten Verschiebungsstellung des Verschiebungselements 40 zur Verrastung mit dem Rastkörper 58, wodurch der weiteren Verschiebung des Verschiebungselements 40 eine überwindbare Widerstandskraft entgegenwirkt.

## Patentansprüche

1. Hebelventil für eine Sanitärarmatur mit Kaltwasser- und Warmwasserzuläufen mit
- einem Gehäuse (12),
- einer Buchse (14), die in dem Gehäuse (12) drehbar gelagert ist,
- einem Stellhebel (18), der um eine quer zur Längsachse (16) der Buchse (14) verlaufende Schwenkachse (20) kippbar in der Buchse (14) gelagert ist,
- einem Ventilglied, das von dem Stellhebel (18) durch Bewegen um die Längsachse (16) der Buchse (14) zwecks Mischens von Kalt- und Warmwasser und durch Kippen um die Schwenkachse (20) zwecks Einstellens der Durchflussmenge des Mischwassers verstellbar ist, und
- einem drehfest an dem Gehäuse (12) angeordneten Anschlagring (22), der zwei Anschläge zur Begrenzung der Bewegung des Stellhebels (18) und/oder der Buchse (14) um deren Längsachse (16) aufweist,
**dadurch gekennzeichnet,**
- **dass** der Anschlagring (22) zwei unter Bildung eines Aufnahmeringschlitzes (32) übereinander angeordnete Ringelemente (24, 26) und zwei die Ringelemente (24, 26) verbindende Anschlagstege (28, 30) aufweist, die die Anschläge bilden, und
- **dass** ein Verschiebungselement (40) vorgesehen ist, das sich an zwei gegenüberliegenden Enden (44, 46) bis in und/oder durch den Aufnahmeringschlitz (32) hinein bzw. hindurch erstreckt und das von dem Stellhebel (18) durchdrungen ist,
- wobei das Verschiebungselement (40) beim Kippen des Stellhebels (18) um dessen Schwenkachse (20) innerhalb des Aufnahmeringschlitzes (32) linear bewegbar und bei Verschwenkung des Stellhebels (18) um die Längsachse (16) der Buchse (14) bis zu die Bewegung des Stellhebels und/oder der Buchse begrenzenden Anlage an mindestens einem der beiden Anschlagstege (28, 30) innerhalb des Aufnahmeringschlitzes (32) drehend mitnehmbar ist.

2. Hebelventil nach Anspruch 1, **dadurch gekennzeichnet, dass** der Stellhebel (18) zumindest innerhalb seines das Verschiebungselement (40) durchdringenden Bereichs einen polygonalen Querschnitt aufweist und dass das Verschiebungselement (40) eine Aussparung (42) mit zu diesem Querschnitt komplementärem Randverlauf aufweist.

3. Hebelventil nach Anspruch 1 oder 2, **dadurch gekennzeichnet, dass** die Anschlagstege (28, 30) punktsymmetrisch zum Mittelpunkt des Anschlagrings (22) angeordnet sind und an ihren Enden Anschlagflächen (48, 50) aufweisen, wobei die jeweils im wesentlichen diametral gegenüberliegenden Anschlagflächen (48, 50) der beiden Anschlagstege (28, 30) in einer sich quer zur Linearbewegungsrichtung des Verschiebungselements erstreckenden Richtung voneinander einen Abstand aufweisen, der im wesentlichen gleich der Breitenerstreckung (64) des Verschiebungselements (40) quer zu seiner Linearbewegungsrichtung ist.

4. Hebelventil nach einem der Ansprüche 1 bis 3, **dadurch gekennzeichnet, dass** das Verschiebungselement (40) mit Reibung innerhalb des Anschlagringschlitzes (32) und/oder im/am Gehäuse (12) angeordnet ist.

5. Hebelventil nach einem der Ansprüche 1 bis 4, **dadurch gekennzeichnet, dass** in/an der Buchse (14) mindestens ein Rastkörper (58) gelagert ist, der längs des von dem Stellhebel (18) bei dessen Kippen um die Schwenkachse (20) beschriebenen Kippweges angeordnet ist und dass das Verschiebungselement (40) einen Rastnocken (66) und/oder eine Rastausnehmung aufweist, der/die zur überwindbaren Begrenzung des Kippweges des Stellhebels (18) mit dem Rastkörper (58) zusammenwirkt/zusammenwirken.

6. Hebelventil nach Anspruch 5, **dadurch gekennzeichnet, dass** das Verschiebungselement (40) mindestens eine Vertiefung (62) aufweist, innerhalb derer der Rastnocken (66) vorsteht.

7. Hebelventil nach Anspruch 5 oder 6, **dadurch gekennzeichnet, dass** das Verschiebungselement (40) eine Aussparung (42) aufweist, durch die sich der Stellhebel (18) erstreckt, und dass die Aussparung (42) in Richtung der Erstreckung des Kippweges des Stellhebels (18) ein solches Ausmaß aufweist, dass, ohne das Verschiebungselement (40) aus seiner Verrastung mit dem Rastkörper (58) zu bewegen, ein Wasserfluss bis zu einer vorgebbaren Menge möglich ist.

8. Hebelventil nach einem der Ansprüche 5 bis 7, **dadurch gekennzeichnet, dass** der Rastkörper (58) dann, wenn er sich außer Eingriff mit dem Rastnocken (66) oder der Rastausnehmung des Verschiebungselements (40) befindet, auf diesen/diese eine ungewollte Linearverschiebung des Verschiebungselements (40) verhindernde Kraft ausübt.

9. Hebelventil nach einem der Ansprüche 1 bis 8, **dadurch gekennzeichnet, dass** das Verschiebungselement (40) eine im wesentlichen rechteckige Platte ist, deren rechtwinklig zueinander verlaufende Erstreckungen parallel und quer zur Linearbewegungsrichtung des Verschiebungselements (40) verlaufen.

## Claims

1. Lever valve for a sanitary fitting with cold water and hot water inlets, having
- a housing (12),
- a bushing (14), which is rotatably mounted in the housing (12),
- an adjusting lever (18), which is mounted in the bushing (14) so as to be tiltable about a pivot axis (20) running transversely with respect to the longitudinal axis (16) of the bushing (14),
- a valve member which, by means of the adjusting lever (18), is adjustable by movement about the longitudinal axis (16) of the bushing (14) for the purpose of mixing cold and hot water and by tilting about the pivot axis (20) for the purpose of setting the amount of mixed water flowing through, and
- a stop ring (22) arranged non-rotatably on the housing (12), which stop ring has two stops for limiting the movement of the adjusting lever (18) and/or the bushing (14) about its longitudinal axis (16),
**characterized in that**
- the stop ring (22) has two ring elements (24, 26), which are arranged one above the other to form a holding ring slot (32), and two stop ribs (28, 30), joining the ring elements (24, 26), which ribs form the stops, and
- a displacement element (40) is provided, which at two opposite ends (44, 46) extends into and/or through the holding ring slot (32) and through which the adjusting lever (18) passes,
- the displacement element (40) being movable linearly inside the holding ring slot (32) when the adjusting lever (18) is tilted about its pivot axis (20) and, when the adjusting lever (18) is pivoted about the longitudinal axis (16) of the bushing (14), being able to be moved in rotation inside the holding ring slot (32) until it makes contact with at least one of the two stop ribs (28, 30), which contact limits the movement of the adjusting lever and/or the bushing.

2. Lever valve according to claim 1, **characterized in that** the adjusting lever (18) has a polygonal cross-section at least inside its region that passes through the displacement element (40), and the displacement element (40) has an opening (42) with a profile complementary to that cross-section.

3. Lever valve according to claim 1 or 2, **characterized in that** the stop ribs (28, 30) are arranged point-symmetrically with respect to the centre point of the stop ring (22) and have stop faces (48, 50) at their ends, the respective substantially diametrically opposite stop faces (48, 50) of the two stop ribs (28, 30) having a spacing from one another in a direction running transversely with respect to the direction of linear movement of the displacement element, which spacing is substantially the same as the widthwise dimension (64) of the displacement element (40) transverse to its direction of linear movement.

4. Lever valve according to any one of claims 1 to 3, **characterized in that** the displacement element (40) is positioned frictionally inside the stop ring slot (32) and/or in/on the housing (12).

5. Lever valve according to any one of claims 1 to 4, **characterized in that** in/on the bushing (14) there is mounted at least one locking body (58) which is arranged along the tilting path described by the adjusting lever (18) when it is tilted about the pivot axis (20), and the displacement element (40) has a locking lug (66) and/or a locking recess which cooperate(s) with the locking body (58) to provide an overridable limit for the tilting path of the adjusting lever (18).

6. Lever valve according to claim 5, **characterized in that** the displacement element (40) has at least one depression (62) inside which the locking lug (66) projects.

7. Lever valve according to claim 5 or 6, **characterized in that** the displacement element (40) has an opening (42) through which the adjusting lever (18) extends, and the opening (42) has such an extent in the direction of the tilting path of the adjusting lever (18) that, without the displacement element (40) being moved out of its engagement with the locking body (58), a flow of water up to a presettable amount is possible.

8. Lever valve according to any one of claims 5 to 7, **characterized in that** the locking body (58), when it is not in engagement with the locking lug (66) or the locking recess of the displacement element (40), exerts on the lug or recess a force preventing unintentional linear displacement of the displacement element (40).

9. Lever valve according to any one of claims 1 to 8, **characterized in that** the displacement element (40) is a substantially rectangular plate, the dimensions of which running at right-angles to one another run parallel with and transversely with respect to the direction of linear movement of the displacement element (40).

## Revendications

1. Soupape à levier de robinet sanitaire avec arrivée d'eau froide et d'eau chaude, comprenant :
- un boîtier (12),
- une douille (14) logée à rotation dans le boîtier (12),
- un levier de réglage (18) monté basculant dans la douille (14) autour d'un axe de basculement (20) transversal à l'axe longitudinal (16) de la douille (14),
- un organe de soupape déplacé par le levier d'actionnement (18) autour de l'axe longitudinal (16) de la douille (14) pour mélanger l'eau chaude et l'eau froide et basculé autour de l'axe de basculement (20) pour régler le débit de l'eau mélangée, et
- une bague de butée (22) solidaire en rotation du boîtier (12), ayant deux butées pour limiter le mouvement du levier de réglage (18) et/ou de la douille (14) autour de son axe longitudinal (16),
**caractérisée en ce que**
- la bague de butée (22) se compose de deux anneaux (24, 26) superposés formant entre eux une fente de réception (32), et de deux entretoises de butée (28, 30) reliant les deux anneaux (24, 26), et constituant les butées, et
- un coulisseau (40) venant par ses deux extrémités opposées (44, 46) jusque dans et/ou à travers la fente de réception (32), le coulisseau étant traversé par le levier de réglage (18),
- le coulisseau (40) étant déplacé linéairement par le basculement du levier de réglage (18) autour de son axe de basculement (20) à l'intérieur de la fente annulaire de réception (32), et le coulisseau est entraîné en pivotement par le pivotement du levier d'actionnement (18) autour de l'axe longitudinal (16) de la douille (14) jusqu'à venir en appui contre au moins l'une des deux entretoises de butée (28, 30), limitant le mouvement du levier de réglage et/ ou de la douille.

2. Soupape à levier selon la revendication 1,
**caractérisée en ce que**
le levier de réglage (18) possède une section polygonale au moins dans sa zone qui traverse le coulisseau (40), et
le coulisseau (40) a une découpe (42) dont le tracé du contour est complémentaire à cette section.

3. Soupape à levier selon la revendication 1 ou 2,
**caractérisée en ce que**
les entretoises formant butée (28, 30) sont symétriques par rapport au centre de l'anneau de butée (22), et présentent à leurs extrémités, des surfaces de butée (48, 50),
les surfaces de butée (48, 50) chaque fois pratiquement diamétralement opposées des deux entretoises de butée (28, 30), s'étendent dans une direction transversale à la direction de déplacement linéaire du coulisseau en étant écartées d'un écart qui correspond pratiquement à la largeur (64) du coulisseau (40) mesurée transversalement à la direction de mouvement linéaire du coulisseau.

4. Soupape à levier selon les revendications 1 à 3,
**caractérisée en ce que**
le coulisseau (40) est installé avec frottement dans la fente de l'anneau de réception (32) et/ou dans ou sur le boîtier (12).

5. Soupape à levier selon les revendications 1 à 4,
**caractérisée en ce qu'**
au moins un organe d'accrochage (58) est prévu dans ou sur la douille (14) le long de sa trajectoire de basculement décrite par le levier d'actionnement (18) lorsqu'il bascule autour de l'axe de basculement (20), et le coulisseau (40) comporte une came d'accrochage (66) et/ou une cavité d'accrochage qui coopère avec l'organe d'accrochage (58) pour vaincre la limitation de la course de basculement du levier d'actionnement (18).

6. Soupape à levier selon la revendication 5,
**caractérisée en ce que**
le coulisseau (40) comporte au moins une cavité (62) dans laquelle la came d'encliquetage (66), vient en saillie.

7. Soupape à levier selon la revendication 5 ou 6,
**caractérisée en ce que**
le coulisseau (40) comporte une découpe (42) traversée par le levier d'actionnement (18), et
dans la direction de l'extension de la course de basculement du levier de réglage (18), la découpe (42) a une dimension telle que sans dégager le coulisseau (40) de son accrochage à l'organe d'accrochage (58), le débit d'eau peut atteindre un débit prédéfini.

8. Soupape à levier selon les revendications 5 à 7,
**caractérisée en ce que**
l'organe d'accrochage (58) hors prise de la came d'accrochage (66) ou de la cavité d'accrochage du coulisseau (40), exerce sur celui-ci ou sur ceux-ci, une force interdisant tout coulissement linéaire non commandé du coulisseau (40).

9. Soupape à levier selon les revendications 1 à 8,
**caractérisée en ce que**
le coulisseau (40) est une plaque essentiellement rectangulaire dont les dimensions perpendiculaires entre elles sont parallèles et transversales à la direction de déplacement linéaire du coulisseau (40).
